# EUROPÄISCHE PATENTSCHRIFT

(11) **EP 3 450 383 B1**
(45) Veröffentlichungstag und Bekanntmachung des Hinweises auf die Patenterteilung: **06.05.2020**
(21) Anmeldenummer: 17189463.7
(22) Anmeldetag: 05.09.2017
(51) Int. Cl.: B66C 23/70, F16B 7/10, A47B 9/20, F16M 11/28

(54) **TELESKOPSÄULE**
TELESCOPIC COLUMN
COLONNE TÉLESCOPIQUE

(43) Veröffentlichungstag der Anmeldung: 06.03.2019
(73) Patentinhaber: Maurer, Erika, 3615 Heimenschwand (CH); Pereira Jaureguiberry, Andrés Daniel, 3615 Heimenschwand (CH)
(72) Erfinder: Maurer, Ernst, 3615 Heimenschwand (CH)
(74) Vertreter: AMMANN PATENTANWÄLTE AG

(56) Entgegenhaltungen:
- EP-A1- 0 419 803
- WO-A1-2008/152108
- DE-U1- 29 705 009

## Beschreibung

Die Erfindung betrifft eine Teleskopsäule nach dem Oberbegriff des Patentanspruchs 1.

Derartige Teleskopsäulen werden zur höhenverstellbaren Halterung von Lasten wie beispielsweise Bildschirmen oder Tischplatten eingesetzt. Die Hohlprofile sind dabei vorzugsweise durch Strangpressen hergestellt, wobei sie aus Metall, vorzugsweise Leichtmetall, aus Kunststoff oder anderen Werkstoffen bestehen können. Ein bekanntes Problem bei der Paarung entsprechender Hohlprofile besteht in den fertigungsbedingten Toleranzen bei den Abmessungen der Hohlprofile.

Im Dokument WO2008/152108A1 sind Hohlprofile und daraus hergestellte teleskopartig ausfahrbare Träger beschrieben, wobei die Hohlprofile aus Einzelteilen aufgebaut sind. Als Vorteile sind das Einbauen von Teilen, beispielsweise eines Motors in den Hohlraum und das Einsetzen von Gleitkörpern zwischen den gegeneinander beweglichen Profilen genannt. Auch der Ausgleich von Toleranzen ist in diesem Dokument ein Thema, jedoch weisen die dargestellten und beschriebenen Beispiele folgende Nachteile auf. Bei den aus vier Einzelteilen zusammengesetzten Profilen ist das Verbinden durch Kleben sehr aufwendig, weil alle vier Einzelteile bis zum Aushärten des Klebstoffs fixiert werden müssen, was relativ komplizierte Spannmittel voraussetzt, die gleichzeitig in zueinander rechtwinkligen Richtungen wirken. Mit den aus zwei Einzelteilen zusammengesetzten Profilen lassen sich Toleranzen nur in einer Richtung, nämlich der Richtung, in der die Einzelteile zusammengefügt werden, ausgleichen. Zudem bieten einige der dargestellten Fügestellen nur wenig Fläche für Klebstoff.

Ausgehend von diesem Stand der Technik liegt der Erfindung die Aufgabe zugrunde, eine Teleskopsäule vorzuschlagen, bei der beim Zusammenbau Toleranzen sowohl in der Spannrichtung als auch rechtwinklig dazu ausgeglichen werden. Ausserdem sollen die Fügestellen ausreichend Klebefläche bieten, um eine gute und dauerhafte Verbindung zwischen den Teilprofilen zu erreichen.

Diese Aufgabe wird erfindungsgemäss durch die im kennzeichnenden Teil des Patentanspruchs 1 angegebenen Merkmale gelöst.

Durch die Schrägstellung der Längsrippen und Längsnuten gegenüber der Mantelfläche des ersten Teilprofils werden die zweiten Teilprofile in Richtung auf das Innenprofil mitgenommen, wenn die ersten Teilprofile zum Verkleben in Richtung zum Innenprofil hin gespannt werden. Somit erfolgt ein Toleranzausgleich gleichzeitig in zwei Richtungen. Durch die Kombination der Längsrippen und Längsnuten ergibt sich bei jeder Fügestelle ein doppeltes Nut-Feder-Profil, wodurch eine grosse Haftfläche für Klebstoff zur Verfügung steht.

Besondere Ausführungsarten der Erfindung sind in den abhängigen Patentansprüchen umschrieben.

Ausführungsbeispiele der Erfindung werden nachstehend unter Bezugnahme auf die angefügten Zeichnungen erläutert. Es zeigen
- Figur 1: eine Querschnittsansicht eines ersten Ausführungsbeispiels einer Teleskopsäule mit zwei Profilen;
- Figur 2: einen Ausschnitt aus Figur 1 in vergrössertem Massstab;
- Figur 3: eine Querschnittsansicht eines zweiten Ausführungsbeispiels einer Teleskopsäule mit drei Profilen;
- Figur 4: einen Ausschnitt aus Figur 3 in vergrössertem Massstab;

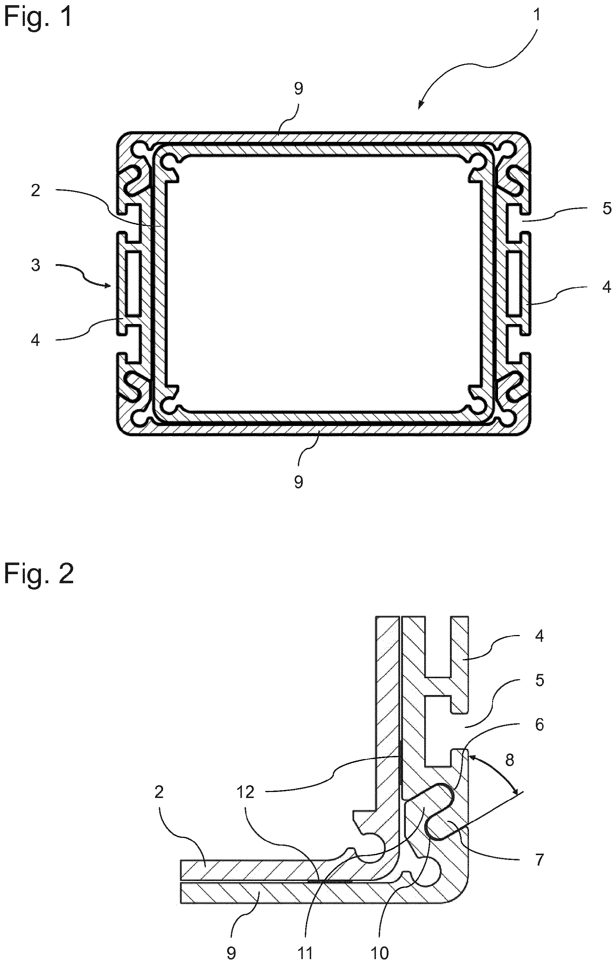

Die Teleskopsäule 1, die in Figur 1 in einer Querschnittsansicht dargestellt ist, besteht aus einem vorzugsweise einstückigen Innenprofil 2 und einem dieses Innenprofil 2 umgebenden Aussenprofil 3. Bevorzugt ist das Innenprofil 2 im beispielsweise auf einer nicht dargestellten Grundplatte befestigten Aussenprofil 3 teleskopisch verschiebbar. Zur Verschiebung des Innenprofils 2 kann eine Antriebsvorrichtung vorgesehen sein, die beispielsweise als Spindel- oder Bandantrieb oder als hydraulischer beziehungsweise pneumatischer Zylinder ausgebildet ist.

Das Aussenprofil 3 ist aus zwei Paaren von Teilprofilen 4 und 9 zusammengesetzt. Im dargestellten Beispiel sind im Teilprofil 4 T-Nuten 5 vorhanden, die beispielsweise zur Befestigung der Teleskopsäule an einer Stützstruktur dienen können, indem ein so genannter Nutenstein, der mit einem Innen- oder Aussengewinde ausgestattet ist, in die T-Nut 5 eingeführt wird.

Figur 2 zeigt in einer vergrösserten Ansicht die rechte untere Ecke der Teleskopsäule 1 von Figur 1. Das Teilprofil 4 weist, von seinem Rand her gesehen, zunächst eine Längsrippe 7 und unmittelbar daran anschliessend eine Längsnut 6 auf. Am Teilprofil 9 ist der Rand zum ersten Teilprofil 4 hin abgewinkelt und weist am freien Ende des abgewinkelten Schenkels eine Längsrippe 11 und unmittelbar daran anschliessend eine Längsnut 10 auf. Wie Figur 2 deutlich zeigt, passt die Längsrippe 7 des Teilprofils in die Längsnut 10 des Teilprofils 9 und die Längsrippe 11 des Teilprofils 9 in die Längsnut 6 des Teilprofils 4. Die so entstandene Verbindung kann man als doppelte Nut-Feder-Verbindung bezeichnen. Dabei ist im Vergleich mit einer einfachen Nut-Feder-Verbindung die Kontaktfläche wesentlich grösser und bietet somit beim Verkleben der Teilprofile 4, 9 eine bessere Haftung.

Alle Längsrippen 7, 11 und Längsnuten 6, 10 sind bezüglich der Wandfläche des Teilprofils 4 in einem Winkel 8 angeordnet, der weniger als 90 Grad beträgt. Diese Anordnung hat den Effekt, dass wenn das Teilprofil 4 nach dem Zusammenfügen der Teilprofile 4, 9 gegen das Innenprofil 2 gedrückt wird, das Teilprofil 9 durch die beschriebene Verbindung mitgenommen wird und ebenfalls gegen das Innenprofil 2 gedrückt wird. Der Winkel 8 wird vorteilhaft entsprechend dem Verhältnis der Breiten der Teilprofile 4, 9 dimensioniert. Wenn beispielsweise die Hohlprofile einen quadratischen Querschnitt haben, beträgt der Winkel 8 45 Grad. Im dargestellten Beispiel sind die Querschnitte rechteckig, wobei das Teilprofil 9 breiter ist als das Teilprofil 4. Entsprechend beträgt hier der Winkel 8 mehr als 45 Grad, nämlich beispielsweise 60 Grad. Dadurch werden beim Zusammenfügen der Teilprofile 4 in Richtung auf das Innenprofil 2 um einen ersten Weg die Teilprofile 9 um einen zweiten Weg gegen das Innenprofil 2 bewegt, der kleiner ist als der erste Weg. Dies ist einerseits deshalb sinnvoll, weil die Herstellungstoleranz des Innenprofils 2 bei seiner längeren Kante betragsmässig grösser ist als bei seiner kürzeren Kante. Andererseits wird die durch eine rechteckige Teleskopsäule zu hebende Last vorteilhaft an der im Querschnitt kürzeren Seitenfläche befestigt, weil in dieser Richtung die Biegesteifigkeit der Teleskopsäule grösser ist. Aus diesem Grund ist auch die Spielfreiheit in dieser Richtung wichtiger.

Zwischen der Aussenwand des Innenprofils 4 und der Innenwand des Aussenprofils 3 sind im Bereich der Ecken Gleitelemente 12 angeordnet, die vorzugsweise als einseitig selbstklebende Streifen aus UHMW (Ultrahochmolekulares Polyäthylen) ausgebildet sind. Vor dem Zusammenfügen des Aussenprofils 3 werden diese Gleitelemente 12 an den Teilprofilen 4, 9 befestigt und dann wird ein Klebstoff auf die Längsrippen 7 und 11 der Teilprofile 4 beziehungsweise 9 aufgetragen. Dann werden die Teilprofile 5, 9 zunächst locker zusammengefügt und anschliessend wird auf die Teilprofile 4 eine Kraft in Richtung auf das Innenprofil 2 ausgeübt, bis die Teilprofile 4 unter Zwischenlage der Gleitelemente 12 am Innenprofil 4 anliegen. Durch die beschriebene Schrägstellung der Längsrippen 7, 11 und Längsnuten 6, 10 werden die Teilprofile 9 mitgenommen und liegen nun ebenfalls unter Zwischenlage der Gleitelemente 12 am Innenprofil 2 an. Somit ist das Spiel zwischen den Profilen vollständig aufgehoben. Die Kraft wird so lange aufrechterhalten, bis der Klebstoff ausgehärtet ist. Das Aufbringen der Kraft kann mit sehr einfachen, in nur einer Richtung wirksamen Mitteln realisiert werden, beispielsweise mit Schraubzwingen oder einer ähnlich einfachen Spannvorrichtung. Bei liegender Montage kann es sogar genügen, die zusammengefügten Profile mit Gewichten zu belasten.

Wie man in Figur 2 sieht, ist der Kopf jeder Längsrippe 7, 11 und der Grund jeder Längsnut 6, 16 abgerundet, wodurch der zum Verbinden der Teilprofile 4, 9 dienende Klebstoff gut verteilt und in die Zwischenräume gepresst wird. Den gleichen Zweck können alternativ auch polygonale Formen dienen. Zwischen dem abgerundeten Kopf der Längsrippe 7, 11 und dem zugeordneten Grund der Längsnut 6, 10 ist jeweils ein Spiel vorhanden, damit die Teilprofile 4, 9 am Innenprofil 2 zur Anlage gebracht werden können, bevor die Längsrippen am Grund der Längsnuten anstehen.

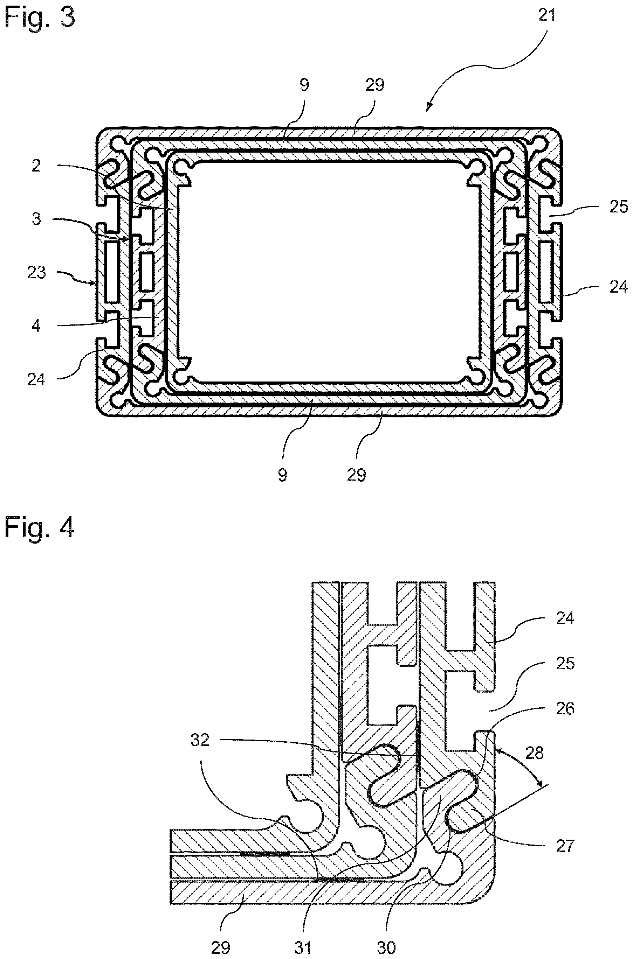

Die Figuren 3 und 4 zeigen anhand einer Teleskopsäule 21, dass das bisher beschriebene Prinzip durch weitere Teleskopstufen praktisch beliebig erweiterbar ist. Die für die das dargestellte zusätzliche Aussenprofil verwendeten Bezugszeichen entsprechen denjenigen der Figuren 1 und 2, erhöht um 20. Beim Zusammenbau dieser Teleskopsäule 21 wird gleich vorgegangen wie bei der anhand der Figuren 1 und 2 beschriebenen Teleskopsäule 1, wobei vorzugsweise die weiteren Teilprofile 24 und 29 angebracht werden, bevor der Klebstoff der Teilprofile 4 und 9 ausgehärtet ist. Durch Aufbringen einer Spannkraft auf die Teilprofile 24 werden alle Teilprofile gleichzeitig spielfrei zur Anlage gebracht und das Aushärten sämtlicher Klebeverbindungen kann gleichzeitig erfolgen.

Das beschriebene und dargestellte System hat den weiteren Vorteil, dass die Teilprofile unabhängig von ihrer Breite immer zusammen passen, wodurch sie zu Teleskopsäulen mit unterschiedlichen Querschnittsproportionen kombiniert werden können, so dass nicht für jede neue Querschnittsproportion für alle Teilprofile neue Werkzeuge, insbesondere Extrusionsmatrizen benötigt werden.

### Bezugszeichenliste

- 1: Teleskopsäule
- 2: Innenprofil
- 3: Aussenprofil
- 4: Teilprofil
- 5: T-Nut
- 6: Längsnut
- 7: Längsrippe
- 8: Winkel
- 9: Teilprofil
- 10: Längsnut
- 11: Längsrippe
- 12: Gleitelement

- 21: Teleskopsäule
- 23: Aussenprofil
- 24: Teilprofil
- 25: T-Nut
- 26: Längsnut
- 27: Längsrippe
- 28: Winkel
- 29: Teilprofil
- 30: Längsnut
- 31: Längsrippe
- 32: Gleitelement

## Patentansprüche

1. Teleskopsäule mit mindestens zwei teleskopisch verschiebbaren, vierkantigen Hohlprofilen, wobei ein Innenprofil (2) von mindestens einem Aussenprofil (3) umgeben ist, das aus vier Teilprofilen (4, 9) zusammengesetzt ist, **dadurch gekennzeichnet, dass** zwei einander gegenüberliegende erste Teilprofile (4) an beiden Längsrändern eine Längsrippe (7) und daran unmittelbar anschliessend eine Längsnut (6) aufweisen, wobei der Winkel (8) zwischen der Längsrippe (7) beziehungsweise Längsnut (6) und der Mantelfläche des ersten Teilprofils (4) weniger als 90 Grad beträgt und dass zwei einander gegenüberliegende zweite Teilprofile (9) an beiden Längsrändern in Richtung auf die ersten Teilprofile (4) abgewinkelt sind und am Ende des abgewinkelten Bereichs eine die Längsrippe (7) des benachbarten ersten Teilprofils (4) aufnehmende Längsnut (10) und eine in der Längsnut (6) des ersten Teilprofils (4) aufgenommene Längsrippe (11) aufweisen.

2. Teleskopsäule nach Anspruch 1, **dadurch gekennzeichnet, dass** das Innenprofil (2) einstückig ist.

3. Teleskopsäule nach einem der vorangehenden Ansprüche, **dadurch gekennzeichnet, dass** der Kopf der Längsrippen (7) des ersten Teilprofils (4) und/oder der Kopf der Längsrippen (11) des zweiten Teilprofils (3) abgerundet ist.

4. Teleskopsäule nach einem der vorangehenden Ansprüche, **dadurch gekennzeichnet, dass** der Grund der Längsnuten (6) des ersten Teilprofils (4) und/oder der Grund der Längsnuten (10) des zweiten Teilprofils (3) abgerundet ist.

5. Teleskopsäule nach einem der vorangehenden Ansprüche, **dadurch gekennzeichnet, dass** zwischen der Aussenwand des Innenprofils (2) und der Innenwand des Aussenprofils (3) Gleitelemente (12) angeordnet sind.

6. Teleskopsäule nach Anspruch 5, **dadurch gekennzeichnet, dass** die Gleitelemente (12) als vorzugsweise einseitig selbstklebende Streifen ausgebildet sind.

7. Teleskopsäule nach einem der vorangehenden Ansprüche, **dadurch gekennzeichnet, dass** um das Aussenprofil (3) von einem weiteren Aussenprofil (23) umgeben ist.

## Claims

1. Telescopic column comprising at least two telescopically displaceable rectangular hollow profiles, where an inner profile (2) is surrounded by at least one outer profile (3) that is composed of four profile sections (4, 9), **characterised in that** two opposite first profile sections (4) are provided at both of their longitudinal edges with a longitudinal ridge (7) and with a directly adjacent longitudinal groove (6), the angle (8) between the longitudinal ridge (7) and the longitudinal groove (6), respectively, and the lateral surface of the first profile section (4) being less than 90 degrees, and **in that** two opposite second profile sections (9) are angled at both of their longitudinal edges towards the first profile sections (4) and are provided at the end of their angled portion with a longitudinal groove (10) receiving the longitudinal ridge (7) of the adjacent profile section (4) and with a longitudinal ridge (11) received in the longitudinal groove (6) of the first profile section (4).

2. Telescopic column according to claim 1, **characterised in that** the inner profile (2) is made in one piece.

3. Telescopic column according to one of the preceding claims, **characterised in that** the head of the longitudinal ridges (7) of the first profile section (4) and/or the head of the longitudinal ridges (11) of the second profile section (3) is rounded.

4. Telescopic column according to one of the preceding claims, **characterised in that** the bottom of the longitudinal ridges (6) of the first profile section (4) and/or the bottom of the longitudinal ridges (10) of the second profile section (3) is rounded.

5. Telescopic column according to one of the preceding claims, **characterised in that** sliding elements are arranged between the outer wall of the inner profile (2) and the inner wall of the outer profile (3).

6. Telescopic column according to claim 5, **characterised in that** the sliding elements (12) are in the form of strips that are preferably self-adhesive on one side.

7. Telescopic column according to one of the preceding claims, **characterised in that** the outer profile (3) is surrounded by another outer profile (23).

## Revendications

1. Colonne télescopique comprenant au moins deux profilés creux rectangulaires qui sont télescopiquement déplaçables, où un profilé intérieur (2) est entouré d'au moins un profilé extérieur (3) lequel est composé de quatre profilés partiels (4, 9), **caractérisée en ce que** deux premiers profilés partiels (4) opposés présentent aux deux bords longitudinaux une nervure longitudinale (7) et une rainure longitudinale (6) directement adjacente, l'angle (8) entre la nervure longitudinale (7) et la rainure longitudinale (6), respectivement, et la surface latérale du premier profilé partiel (4) étant inférieur à 90 degrés, et **en ce que** deux deuxièmes profilés partiels (9) opposés sont coudés aux deux bords longitudinaux vers les premiers profilés partiels (4) et que l'extrémité de la partie coudée présente une rainure longitudinale (10) recevant la nervure longitudinale (7) du premier profilé partiel (4) voisine et une nervure longitudinale (11) reçue dans la rainure longitudinale (6) du premier profilé partiel (4).

2. Colonne télescopique selon la revendication 1, **caractérisée en ce que** le profilé intérieur (2) est formé d'une seule pièce.

3. Colonne télescopique selon l'une des revendications précédentes, **caractérisée en ce que** la tête des nervures longitudinales (7) du premier profilé partiel (4) et/ou la tête des nervures longitudinales (11) du deuxième profilé partiel (3) est arrondie.

4. Colonne télescopique selon l'une des revendications précédentes, **caractérisée en ce que** le fond des rainures longitudinales (6) du premier profilé partiel (4) et/ou le fond des rainures longitudinales (10) du deuxième profilé partiel (3) est arrondi.

5. Colonne télescopique selon l'une des revendications précédentes, **caractérisée en ce qu'**entre la paroi extérieure du profilé intérieur (2) et la paroi intérieure du profilé extérieur (3) sont agencés des éléments de glissement (12).

6. Colonne télescopique selon la revendication 5, **caractérisée en ce que** les éléments de glissement (12) sont réalisés sous la forme de bandes qui sont préférablement auto-adhésives d'un côté.

7. Colonne télescopique selon l'une des revendications précédentes, **caractérisée en ce que** le profilé extérieur (3) est entouré d'un profilé extérieur (23) supplémentaire.
